# EUROPEAN PATENT APPLICATION

(11) **EP 0 599 565 A1**
(43) Date of publication of application: **01.06.1994**
(21) Application number: 93309253.8
(22) Date of filing: 19.11.1993
(51) Int. Cl.: A01B 21/08

(54) **Reversible disc harrow**

(30) Priority: 20.11.1992 GB 9224357
(71) Applicant: DOWDESWELL ENGINEERING CO. LTD., Stockton Nr. Rugby Warwickshire (GB)
(72) Inventor: Spoor, Gordon, Silsoe, Bedfordshire MK45 4DT (GB); Van den Bosch, Peter, NL-2286 KS Rijswijk (NL)
(74) Representative: Hallam, Arnold Vincent

(57) **Abstract**

A reversible disc harrow has a plough beam (12) on which are pivoted two support beams (18,20) extending across the plough beam. The support beams carry discs (22). At each end of the plough beam (12) a respective draw bar (16) is pivoted for connecting the disc harrow to a tractor or other towing vehicle. The draw bars (14,16) and disc support beams (18,20) are interconnected by a linkage mechanism (23) such that when one of the draw bars (14,16) is connected to the tractor and pivots into a towing position as a result of the towing force applied by the tractor, the disc support beams (18,20) are pivoted into a first position for ploughing in a first direction, with the other draw bar being pivoted into a non-towing position. When the other tow bar is connected to a tractor and pivoted into a towing position, the linkage mechanism (23) pivots the disc support beams (18,20) into a second position for ploughing in the reverse direction.

## Description

The present invention relates to disc harrows.

The present invention seeks to provide an improved disc harrow.

Accordingly, the present invention provides a reversible disc harrow having;
a plough beam;
a first elongate disc support means carrying a plurality of discs, said first disc support means being pivotable on said plough beam in a generally horizontal plane between a first position for ploughing in a first direction and a second position for ploughing in a second, reverse direction;
a second elongate disc support means carrying a plurality of discs, said second disc support means being pivotable on said plough beam in a generally horizontal plane between a first position for ploughing in said first direction and a second position for ploughing in said second, reverse direction;
and a linkage mechanism interconnecting said first and second disc support means such that pivoting of one of said first and second disc support means between said first and second positions causes pivoting of the other of said first and second disc support means between said first and second positions.

The present invention is further described hereinafter, by way of example, with reference to the accompanying drawings, in which:
Figure 1 is a plan view of a first embodiment of a disc harrow according to the present invention having pivotable disc support beams;
Figure 2 is a side elevation of the harrow of Figure 1 with the disc support beams pivoted into a parallel attitude;
Figure 3 is a diagrammatic plan view of the disc harrow of Figure 1 with the harrow discs arranged for travel in the direction of arrow A; and
Figure 4 is a diagrammatic plan view of the harrow of Figure 1 with the discs arranged for travel in the direction of arrow B.

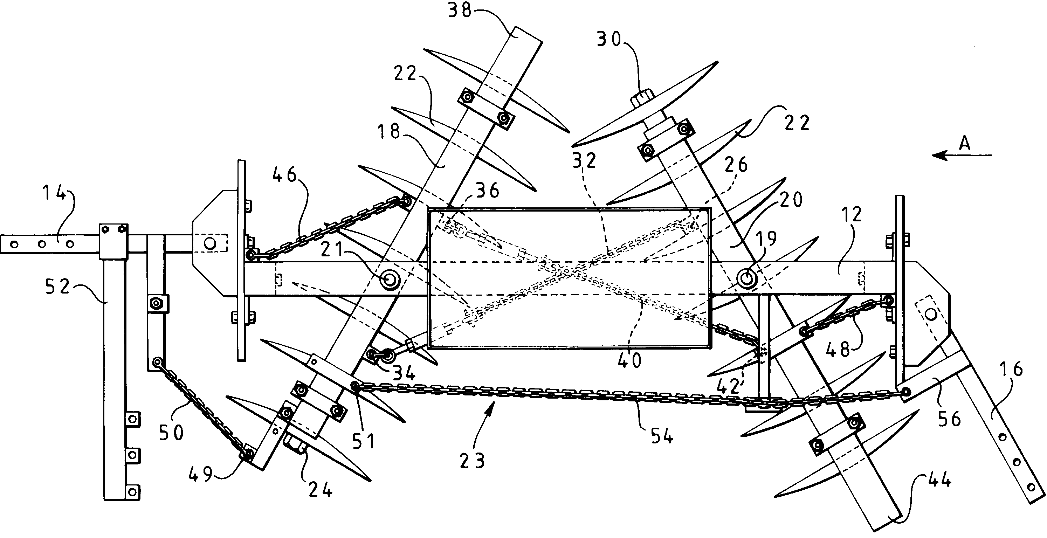

Referring firstly to Figures 1 and 2 these show a disc harrow 10 which has a longitudinal plough beam 12 pivotally connected at each end to a respective draw bar 14, 16.

The plough beam 12 carries two disc support beams 18, 20. Each disc support beam is pivotally mounted on the beam 12, preferably intermediate its ends, by pivots 19,21 so as to be pivotable in a generally horizontal plane towards and away from the other plough support beam and between first and second extreme positions. The beam 18 carries a number of discs 22 whose concave surfaces face towards one end 24 of the beam 18 whilst the beam 20 carries a number of discs 22 whose concave surfaces face towards one end 30, in the opposite direction to those of the discs on beam 18. The beams 18,20 are shown in their first positions in Figure 1 for ploughing in the direction of arrow A.

The beams 18 and 20 are interconnected with one another, the plough beam and the draw bar by a linkage mechanism 23 described below.

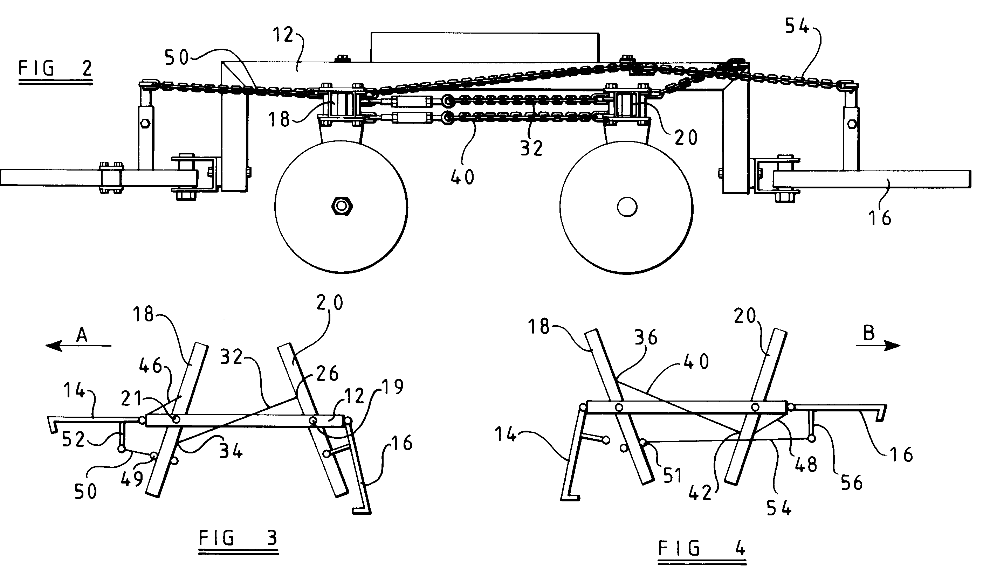

A point 26 on beam 20 intermediate its pivot 19 with the plough beam 12 and end 30 is connected by a link 32 to a point 34 on the beam 18 intermediate its pivot 21 with the plough support beam and its end 24. The point 34 is on the opposite side of the plough beam 12 to point 26. Likewise, a point 36 on beam 18 which is intermediate the pivot 21 of the beam and its opposite end 38 is connected by a link 40 to a point 42 on the beam 20 intermediate its pivot 19 with the beam 12 and its other opposite end 44. The positions of the connecting points 26,34,36 and 42 and the lengths of the links 32,40 are chosen such that the beams 18,20 can be pivoted between the position shown in Figures 1 and 3 and their reverse position (Figure 4). Figures 3 and 4 show only those links which retain the beams 18 and 20 in their respective, illustrated positions.

Pivoting of the beam 18 in a clockwise direction as seen in Figure 1 is limited by a link 46 which connects the plough beam 12 adjacent the draw bar 14 with the pivotable beam 18 adjacent the point 36, whilst pivoting of the beam 20 in a clockwise direction is limited by a further link 48 which connects the plough beam 12 adjacent the draw bar 16 with the pivotable beam 20 adjacent the point 42.

The disc support beam 18 is connected at or adjacent its end 24 to a lateral extension 52 of the adjacent draw bar 14 by a link 50 connected to the beam 18 at point 49. A point 51 intermediate the end 24 of the beam 18 and point 34 is connected by a link 54 to a lateral extension 56 of the draw bar 16 at the opposite end of the plough beam 12.

Referring to Figures 1 and 3, when a tractor hooks up to the draw bar 14, for example, the beams 18 and 20 are pulled into the positions shown in Figures 1 and 3 by the various links, for ploughing in the direction of arrow A.

At the end of a plough run when the tractor needs to plough in the reverse direction, it is uncoupled from the draw bar 14 and coupled to the draw bar 16. When the tractor then moves in the direction of arrow B as shown in Figure 4, the draw bar 16, through link 54 pivots the beam 18 anti-clockwise as seen in Figure 4. The linkage of the beam 18 with the beam 20, in turn pivots the beam 20 in a clockwise direction with the result that the two beams 18 and 20 are pivoted into the attitudes shown in Figure 4. The discs 22 carried by the beams 18 and 20 are thus realigned into their correct orientation for ploughing in the direction of arrow B.

As is shown in the drawings, the links 32, 40, 46, 50 and 54 are conveniently chain links.

## Claims

1. A reversible disc harrow having:
a plough beam (12);
a first elongate disc support means (18) carrying a plurality of discs (22), said first disc support means being pivotable on said plough beam (12) in a generally horizontal plane between a first position for ploughing in a first direction and a second position for ploughing in a second, reverse direction;
a second elongate disc support means (20) carrying a plurality of discs (22), said second disc support means being pivotable on said plough beam (12) in a generally horizontal plane between a first position for ploughing in said first direction and a second position for ploughing in said second, reverse direction;
and a linkage mechanism (23) interconnecting said first and second disc support means (18,20) such that pivoting of one of said first and second disc support means between said first and second positions causes pivoting of the other of said first and second disc support means between said first and second positions.

2. A reversible disc harrow as claimed in claim 1 comprising
a respective first and second draw bar means (14,16) pivotally connected to said plough beam (12) at or adjacent each end thereof for connecting said plough beam to a tractor for towing said plough beam;
wherein each said draw bar means (14,16) is pivotable relative to said plough beam (12) from a non-towing position into a towing position by the application of towing force thereto by the tractor;
and wherein said linkage mechanism (23) connects each said draw bar means (14,16) and one of said disc support means (18,20) such that the pivoting of each said draw bar means from its non-towing position into its towing position for ploughing in one of said first and reverse directions pivots both said disc support means (18,20) into the respective first or second positions for ploughing in said one of said first direction and reverse direction.

3. A reversible disc harrow as claimed in claim 2 wherein:
said first draw bar means (14) is coupled to said first disc support means (18) at or adjacent one end by a first link (50) of said linkage mechanism (23);
said second draw bar means (16) is coupled to said first disc support means (18) at or adjacent said one end by a second link (54) of said linkage mechanism (23);
and said first disc support means (18) is pivoted on said plough beam (12) between said second disc support means (20) and said first draw bar means (14);
the arrangement being such that pivoting of one of said draw bar means (14,16) towards a towing position pivots the other of said draw bar means away from its towing position.

4. A reversible disc harrow as claimed in any of the preceding claims further comprising stop means (46,48) for preventing pivoting of said first and second disc support means (18,20) beyond said first and second positions.

5. A reversible disc harrow as claimed in claim 4 wherein said stop means comprises respective stop links (46,48) connecting said first and second disc support means (18,20) to said plough beam.

6. A reversible disc harrow as claimed in any of the preceding claims wherein said discs (22) on said first disc support means (18) face in the opposite direction to the discs (22) on the second disc support means (20);
and said linkage mechanism (23) is operable to pivot said first and second disc support means (18,20) in opposite directions.

7. A reversible disc harrow as claimed in any of the preceding claims wherein each said disc support means (18,20) is a beam pivoted on said plough beam (12).

8. A reversible disc harrow as claimed in any of the preceding claims wherein said linkage mechanism (23) comprises flexible links.
